Europäisches Patentamt

European Patent Office

Office européen des brevets

(19)

(11) Veröffentlichungsnummer: **0 147 694**

**A2**

(12) # EUROPÄISCHE PATENTANMELDUNG

(21) Anmeldenummer: **84114882.8**

(22) Anmeldetag: **06.12.84**

(51) Int. Cl.⁴: **F 16 F 15/30**
**F 16 F 15/14**

(30) Priorität: **10.12.83 DE 8335470 U**

(43) Veröffentlichungstag der Anmeldung:
**10.07.85 Patentblatt 85/28**

(84) Benannte Vertragsstaaten:
**AT BE CH DE FR GB IT LI LU NL SE**

(71) Anmelder: **Klug, Johann**
**Euler Strasse 2**
**D-3000 Hannover 1(DE)**

(71) Anmelder: **Pedack-Lorenz, Ingrid**
**Euler Strasse 2**
**D-3000 Hannover 1(DE)**

(72) Erfinder: **Klug, Johann**
**Euler Strasse 2**
**D-3000 Hannover 1(DE)**

(72) Erfinder: **Pedack-Lorenz, Ingrid**
**Euler Strasse 2**
**D-3000 Hannover 1(DE)**

(74) Vertreter: **Junius, Walther, Dr.**
**Wolfstrasse 24**
**D-3000 Hannover 81(DE)**

(54) **Schwungrad.**

(57) Die Erfindung betrifft ein Schwungrad, bestehend aus einer Nabe mit an dieser angebrachten Massen. Es ist die Aufgabe der Erfindung, ein Schwungrad zu schaffen, das abhängig von der Drehrichtung unterschiedliche Eigenschaften und Charakteristiken aufweist. Die Erfindung besteht darin, daß die Massen aus Hohlkörpern bestehen oder daß die Masse in ihrem Inneren Hohlräume aufweist, daß im Inneren eines jeden Hohlraumes eine Kugel oder eine Rolle angeordnet ist, daß die Hohlräume länger als breit sind, daß die Längsachse der Hohlräume mit von der Schwungradachse ausgehenden (gedachten) Radiallinien einen spitzen Winkel einschließt, und daß die senkrecht zur Schwungradachse liegenden Wandungen in Form einer endlosen Kurve ausgebildet sind.

FIG.1

Schwungrad

- - - - - - - - - - - - - - - - - - - - - - - -

Die Erfindung betrifft ein Schwungrad, bestehend
aus einer Nabe mit an dieser angebrachten Massen.

Schwungräder sind in den verschiedensten Ausführungsformen bekannt geworden. Die Massen eines
Schwungrades sind um so wirksamer, je weiter
diese nach außen verlegt sind. Deshalb weisen
eine Reihe von Schwungrädern einen äußeren Kranz
von erheblichem Querschnitt auf, während zwischen
diesem Kranz und der Nabe Ausnehmungen und/oder
Durchbrechungen angeordnet sind.

Neben den Schwungrädern mit fest angebrachten
Massen gibt es auch Schwungräder mit beweglich
angebrachten Massen, die um eine Achse verschwenkbar angebracht sind. Dabei verläuft die Drehachse dieser beweglichen Schwungmassen nicht
durch deren Schwerpunkt. An diesen beweglichen
Schwungmassen greifen Federn an, die so vorgespannt sind, daß erst bei Überschreiten bestimmter Werte von Fliehkräften die Bewegung der beweglichen Massen einsetzt. Derartige Schwungräder finden bei Fliehkraftsteuerungen Verwendung, z.B. in Schaltgetrieben, in denen verschiedene Planetenradsätze bei bestimmten Drehzahlen der Abtriebswelle, einer Vorgelegewelle
oder der Antriebswelle geschaltet werden sollen.

Aufgabe der vorliegenden Erfindung ist es, ein Schwungrad zu schaffen, das abhängig von der Drehrichtung unterschiedliche Eigenschaften und Charakteristiken aufweist.

Die Erfindung besteht darin, daß die Massen des Schwungrades aus Hohlkörpern bestehen oder daß die Masse des Schwungrades in ihrem Inneren Hohlräume aufweist, daß im Inneren eines jeden Hohlkörpers bzw. Hohlraumes eine Kugel oder eine Rolle angeordnet ist, daß die Hohlräume länger als breit sind, daß die Längsachse der Hohlräume mit von der Schwungradachse ausgehenden (gedachten) Radiallinien einen spitzen Winkel einschließt und daß die senkrecht zur Schwungradachse liegenden Wandungen in Form einer endlosen Kurve ausgebildet sind.

Ein derartiges Schwungrad läßt sich für viele Zwecke verwenden, im Antrieb irgend welcher Maschinen, zur Erzielung besonderer Charakteristika insbesondere während des Anlaufens, während einer Vergrößerung oder Verringerung der Drehzahl und während des Auslaufens der Maschine. Insbesondere aber kann dieses Schwungrad für Meß- und Steuerzwecke, zur Auslösung von Schaltvorrichtungen und dergleichen verwendet werden.

Zweckmäßig ist es, wenn die Hohlkörper sämtlich gleichgeformt sind. Dann ist die Herstellung am einfachsten und es ergibt sich eine einfache Charakteristik des Drehverhaltens dieses Schwungrades. Baulich wird dieses Schwungrad sehr einfach, wenn die Hohlkörper an der Nabe angeflanscht sind.

Die Charakteristik dieses Schwungrades läßt sich verändern, wenn die Hohlkörper mittels verschwenkbarer Träger an der Nabe angebracht sind. Derartige Veränderungen können fest einstellbar sein, sie können aber auch durch Getriebe während des Laufes des Schwungrades verändert werden.

In die Charakteristik dieses mit aus einer Nabe und einzeln angebrachten Hohlkörpern bestehenden Schwungrades geht neben dem Verhalten der freibeweglichen Kugeln oder Rollen auch der Luftwiderstand ein. Will man diesen Luftwiderstand weitgehendst ausschalten, so ist es zweckmäßig, wenn die Hohlkörper von einem rotationssymmetrischen Gehäuse umgeben sind oder wenn die Masse eines radialsymmetrisch hergestellten Schwungrades im Inneren Hohlkörper aufweist.

Ein Schwungrad der letztgenannten Art wird zweckmäßigerweise so hergestellt, daß es aus zwei Guß- oder Preßkörpern besteht, die vorzugsweise spiegelbildlich gestaltet sind und die Ausnehmungen aufweisen, die jeweils nach dem Zusammenbau der beiden Guß- oder Preßkörper den Hohlraum bilden.

Ein derartiges Schwungrad kann aber auch in anderer Weise hergestellt werden, indem nämlich

- 4 -     **0147694**

ein Körper mit Durchbrechungen von der Form
der Hohlräume hergestellt wird und auf beiden
Seiten mit je einer Platte abgedeckt wird.

Für Schaltzwecke ist es besonders zweckmäßig,
wenn der Körper aus durchsichtigem oder lichtdurchlässigem Material hergestellt ist und wenn
die Fotozellenanordnungen neben dem Schwungrad angeordnet sind.

Dabei ist es zweckmäßig, wenn die Fotozellenanordnungen in oder neben einem Bereich einer
durch die Schwungradachse verlaufenden Ebene
angeordnet sind.

Das Wesen der Erfindung ist nachstehend anhand
von in der Zeichnung schematisch dargestellten
Ausführungsbeispielen näher erläutert. Es zeigen:

Fig. 1   die Seitenansicht eines aus durchsichtigem Material hergestellten Schwungrades,

Fig. 2   einen Querschnitt eines aus zwei Halbschalen hergestellten Schwungrades,

Fig. 3   einen Querschnitt durch ein aus einer
Platte mit Ausnehmungen und zwei seitlich angeordneten Abdeckplatten hergestellten Schwungrad.

Fig. 4   eine Seitenansicht eines aus Hohlkörpern
hergestellten Schwungrades,

Fig. 5   einen einzelnen Hohlraum bzw. Hohlkörper.

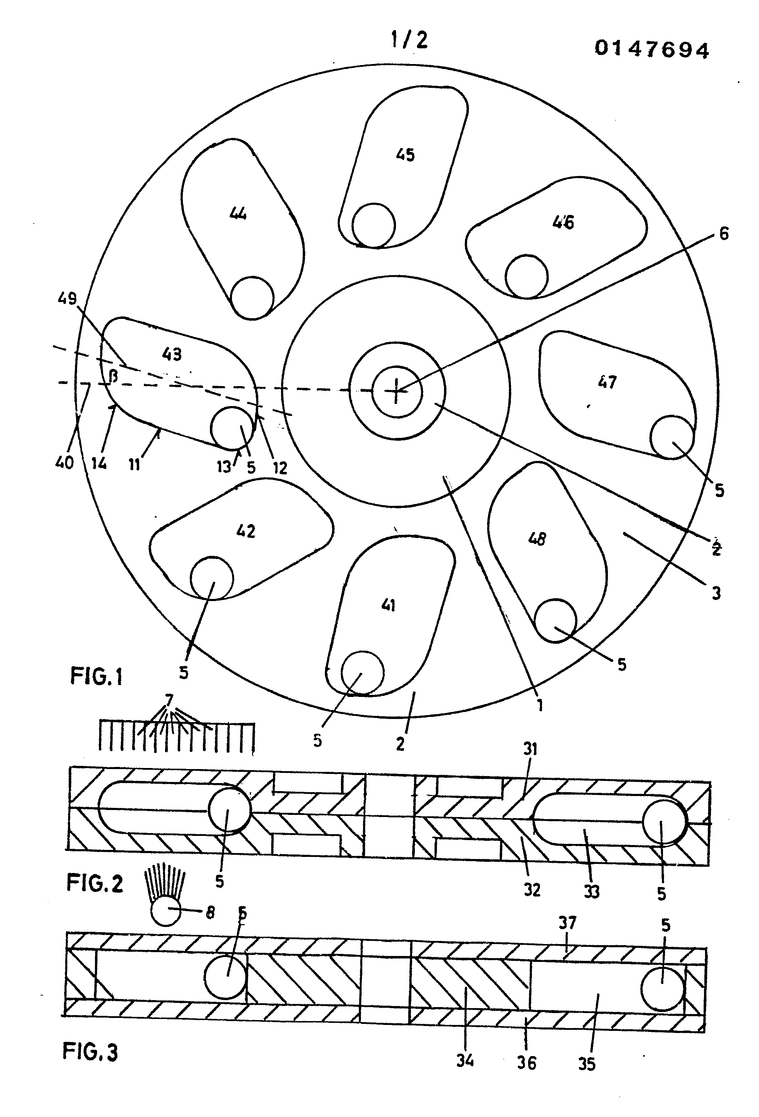

Das Schwungrad der Fig. 1 besteht aus einer
Nabe 1, die mittig eine im Querschnitt kreisförmige Ausnehmung 2 für die Welle aufweist, auf der dieses Schwungrad gelagert wird. Rings um die Nabe 1 befindet sich die rotationssymmetrisch angeordnete Schwungmasse 3, in welcher Hohlräume 41 bis 48 in gleichmäßiger Winkelteilung angeordnet sind. Diese Hohlräume 41 bis 48 sind länger als breit, ihre Längsachse 49 verläuft unter einem spitzen Winkel ß zu einer durch den Mittelpunkt des Hohlraumes verlaufenden Radiallinie 4o. Die Wandungen dieser Hohlräume 41 bis 48 sind in Form einer endlosen Kurve ausgebildet.

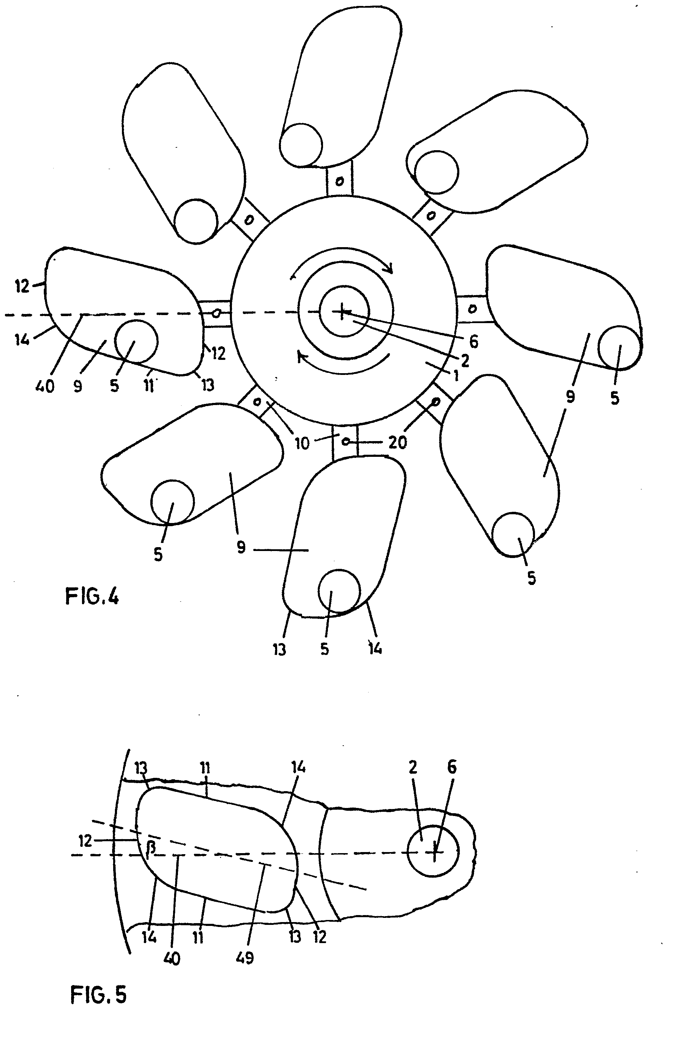

Anhand der Fig. 5 ist die Form dieser Hohlräume näher erläutert: Diese Hohlräume haben zwei gerade Wandabschnitte 11, die unter einem spitzen Winkel zur durch die Mitte des Hohlraumes verlaufenden Radiallinie 4o verlaufen. Die Hohlräume können auch zwei kurze gerade Wandflächen 12 aufweisen, die senkrecht oder genähert senkrecht zur Radiallinie 4o verlaufen. Diese Wandflächen bzw. Umfangsflächen des Hohlraumes bilden somit ein Parallelogramm oder ein einem Parallelogramm sehr ähnliches Trapez. Dabei ist die eine kurze Wand 12 dicht neben der Nabe 1 angeordnet, während die andere kurze Wand 12 sehr weit weg von der Nabe 1 angeordnet ist. Im Bereich zwischen den beiden kurzen Wänden 12 befinden sich die langen Wände 11. Die Ecken dieses Hohlraumes sind abgerundet. Und zwar weist die abgerundete Ecke 13 einen kleinen Radius auf, der aber zweckmäßigerweise nicht kleiner als der Radius der in den Hohlräumen 41 bis 48 untergebrachten Kugeln oder Rollen 5 ist. Zwei solche Ecken 13 mit kleinem Radius liegen sich diametral gegenüber. Die beiden anderen, sich diametral gegenüberliegenden Ecken 14 weisen einen größeren Radius auf.

In jedem Hohlraum 41 bis 48 ist eine Kugel 5 oder eine Rolle untergebracht. In Fig. 1 ist dargestellt, in welcher Lage sich diese Rollen unter dem Einfluß der Schwerkraft befinden. Während die Rolle bzw. Kugel 5 in dem Hohlraum 43 sich in der äußersten Lage dicht neben der Nabe 1 befindet, befindet sich die im Hohlraum 47 befindliche Kugel in einer Lage äußerst weit weg von der Nabe 1. Die Hohlräume 43 und 47 befinden sich im Bereich einer Horizontalebene, die durch die Achse 6 des Schwungrades verläuft. Nach einer Überschreitung einer bestimmten Drehzahl befinden sich alle Kugeln 5 in allen Hohlräumen in der am weitesten von der Nabe 1 entfernten Stellung, also dort, wo sich die Kugeln in den Hohlräumen 47 und 48 der Fig. 1 befinden.

In dazwischen liegenden Drehzahlbereichen wird die Lage der Kugel 5 sowohl durch die Schwerkraft als auch durch die Fliehkraft bestimmt, bei positiven und negativen Beschleunigungsvorgängen, also beim Anfahren und beim Abbremsen kann die Kugel auch noch durch Trägheitskräfte in ihrer Lage beeinflußt werden. Das ist anhand der Fig. 4 näher erläutert: Im Hohlraum 43 liegt die Kugel 5 auf der Wandfläche 11 auf.

Hier wirkt auf sie die Schwerkraft, die sie in die untere Ecke 13 mit kleinem Radius rollen lassen möchte, während die in entgegengesetzter Richtung wirksame Fliehkraft die Kugel 5 in Richtung auf die äußere gerundete Ecke 14 mit großem Radius und an die äußere kurze Wandfläche 12 drücken möchte. In diesem Drehzahlbereich, in welchem sowohl die Schwerkraft als auch die Fliehkraft auf die Kugeln einwirkt, zeigt dieses Schwungrad besondere charakteristische Eigenschaften.

Besondere charakteristische Eigenschaften zeigt dieses Schwungrad aber auch beim Anfahren und Abbremsen. Betrachtet man die Kugel 5 im Hohlraum 41 der Fig. 4, so sieht man, daß auf die Kugel 5 Trägheitskräfte wirken, die die Kugel 5 entgegen der Schwerkraft und entgegen der Fliehkraft, die beide die Kugel 5 in die Ecke 13 mit kleinem Radius zu drücken versuchen, diese Kugel in die Ecke 14 mit großem Radius drücken.

An den Orten, an denen diese Vorgänge erfolgen, kann man bei durchsichtigen oder lichtdurchlässigen Schwungrädern oder mit lichtdurchlässigen Fenstern versehenen Schwungrädern die Stellung der Kugel 5 insbesondere im Hohlraum 43 und im Hohlraum 41 mit Fotozellenanordnungen abtasten, wie sie beispielsweise in Fig. 2 dargestellt sind. Hier sind mehrere Fotozellen 7 in einer Reihe nebeneinander angeordnet. Den Lichtdurchtritt durch das Schwungrad von der Lichtquelle 8 unterbricht für einige der Fotozellen 7 die Kugel
5.

Im Ausführungsbeispiel der Fig. 4 sind es
einzelne Hohlkörper 9, welche mittels Trägern
1o an der Nabe 1 befestigt sind. Jeder Träger ist hierbei zweckmäßigerweise zweiteilig
und verschwenkbar um eine Achse 2o angeordnet, so daß der Winkel ß, den die Längsachse
49 des Hohlraumes mit der Radiallinie 4o einschließt, verändert werden kann.

Im Ausführungsbeispiel der Fig. 2 ist das
Schwungrad aus zwei Halbschalen 31, 32 gebildet, welche einseitig Ausnehmungen 33 aufweisen, die dann, wenn die beiden Halbschalen
31, 32 zusammenmontiert sind, die Hohlräume
41 bis 48 bilden. Im Ausführungsbeispiel der
Fig. 3 besteht das Schwungrad aus einer mittleren Scheibe 34 mit Ausnehmungen 35 sowie aus
zu beiden Seiten der Scheibe 34 angebrachten
Platten 36, 37. Durch diese Platten 36, 37
werden die Ausnehmungen 35 beidseitig verschlossen, so daß nunmehr die Ausnehmungen
35 die Hohlräume 41 bis 48 bilden.

A n s p r ü c h e :

1. Schwungrad,
   bestehend aus einer Nabe mit an dieser angebrachten Massen,
   dadurch gekennzeichnet,
   daß die Massen aus Hohlkörpern (9) bestehen
   oder daß die Masse in ihrem Inneren Hohlräume (41, 48) aufweist, daß im Inneren
   eines jeden Hohlraumes (41-48) eine Kugel
   (5) oder eine Rolle angeordnet ist,
   daß die Hohlräume (41-48) länger als breit
   sind,
   daß die Längsachse (49) der Hohlräume
   (41-48) mit von der Schwungradachse (6) ausgehenden (gedachten) Radiallinien (4o) einen
   spitzen Winkel (ß) einschließt,
   und daß die senkrecht zur Schwungradachse (6)
   liegenden Wandungen (11-14) in Form einer
   endlosen Kurve ausgebildet sind.

2. Schwungrad nach Anspruch 1,
   dadurch gekennzeichnet,
   daß die Hohlkörper (9) bzw. die Hohlräume
   (41-48) sämtlich gleichgeformt sind.

3. Schwungrad nach Anspruch 1,
   dadurch gekennzeichnet,
   daß die Hohlkörper (9) an der Nabe (1) angeflanscht sind.

4. Schwungrad nach Anspruch 1,
   dadurch gekennzeichnet,
   daß die Hohlkörper (9) von einem rotationssymmetrischen Gehäuse umgeben sind.

5. Schwungrad nach Anspruch 1,
dadurch gekennzeichnet,
daß die Hohlkörper (9) mittels verschwenkbarer Träger (1o) an der Nabe (1) angebracht
sind.

6. Schwungrad nach Anspruch 1,
dadurch gekennzeichnet,
daß es aus zwei Guß- oder Preßkörpern (31, 32)
besteht, die jeder einseitig Ausnehmungen
(33) aufweisen und die an den Seiten, an
denen die Ausnehmungen (33) befindlich sind,
miteinander verbunden sind.

7. Schwungrad nach Anspruch 1,
dadurch gekennzeichnet,
daß es aus einer Scheibe (34) mit Hohlräumen
(35) sowie aus zwei, beidseitig der Scheibe
(34) angeordneten Platten (36, 37) besteht,
wobei die Platten (36, 37) die Hohlräume
(35) zu beiden Seiten abdecken und auf diese
Weise die Hohlräume (41, 48) bilden.

8. Schwungrad nach Anspruch 1,
dadurch gekennzeichnet,
daß der Körper des Schwungrades aus durchsichtigem oder lichtdurchlässigem Material
hergestellt ist,
und daß Fotozellenanordnungen (7) neben dem
Schwungrad angeordnet sind.

9. Schwungrad nach Anspruch 1,
dadurch gekennzeichnet,
daß die Fotozellenanordnungen (7) in oder neben einem Bereich einer durch die Schwungradachse (6) verlaufenden  Ebene angeordnet sind.

**FIG.1**

**FIG.2**

**FIG.3**

FIG.4

FIG.5